# EUROPÄISCHE PATENTSCHRIFT

(11) **EP 3 000 149 B1**
(45) Veröffentlichungstag und Bekanntmachung des Hinweises auf die Patenterteilung: **10.05.2017**
(21) Anmeldenummer: 14728826.0
(22) Anmeldetag: 20.05.2014
(51) Int. Cl.: H01M 8/1213, H01M 8/124, H01M 8/1246, H01M 8/1253

(54) **MEHRLAGIGE SCHICHTANORDNUNG FÜR EINEN FESTKÖRPERELEKTROLYT**
MULTI-LAYER SANDWICH STRUCTURE FOR A SOLID-STATE ELECTROLYTE
ENSEMBLE MULTICOUCHE POUR ÉLECTROLYTE SOLIDE

(30) Priorität: 21.05.2013 DE 102013008472
(43) Veröffentlichungstag der Anmeldung: 30.03.2016
(73) Patentinhaber: PLANSEE COMPOSITE MATERIALS GMBH, DE-86983 Lechbruck am See (DE); Forschungszentrum Jülich GmbH, 52425 Jülich (DE); Fraunhofer Gesellschaft zur Förderung der angewandten Forschung e.V., 80686 München (DE)
(72) Erfinder: HAYDN, Markus, A-6600 Breitenwang (AT); ORTNER, Kai, 38108 Braunschweig (DE); RÜTTINGER, Matthias, A-6600 Reutte (AT); FRANCO, Thomas, 70184 Stuttgart (DE); JUNG, Thomas, 38173 Sickte (DE); UHLENBRUCK, Sven, 50259 Pulheim (DE)
(74) Vertreter: Ciesla, Bettina
(86) Internationale Anmeldenummer: PCT/EP2014/001352
(87) Internationale Veröffentlichungsnummer: WO 2014/187559

(56) Entgegenhaltungen:
- EP-A2- 1 170 812
- WO-A1-97/41612
- WO-A1-2007/045111
- WO-A2-02/17420
- FR-A1- 2 935 843
- US-A1- 2006 269 813

## Beschreibung

Die Erfindung betrifft eine Kathode-Elektrolyt-Anodeneinheit für eine elektrochemische Funktionseinrichtung, insbesondere für eine Hochtemperaturbrennstoffzelle, und ein Herstellungsverfahren dazu.

Hochtemperaturbrennstoffzellen (Solid Oxide Fuel Cell - SOFC) ermöglichen eine direkte Umwandlung von chemischer Energie in elektrische Energie. Die elektrochemisch aktive Zelle einer SOFC besteht aus einer sogenannten Kathoden-Elektrolyt-Anoden-Einheit (Einzelzelle), bei der ein gasdichter Feststoffelektrolyt zwischen einer gasdurchlässigen Anode und einer gasdurchlässigen Kathode angeordnet ist. Der Feststoffelektrolyt besteht dabei meist aus einem festen keramischen Werkstoff aus Metalloxid, der Sauerstoffionen leitet, Elektronen aber nicht.

Im Betrieb einer SOFC wird der Anode Brennstoff (beispielsweise Wasserstoff oder herkömmliche Kohlenwasserstoffe, wie Methan, Erdgas, Biogas, ...) zugeführt und dort katalytisch unter Abgabe von Elektronen oxidiert. Die Elektronen werden aus der Brennstoffzelle abgeleitet und fließen über einen elektrischen Verbraucher zur Kathode. An der Kathode wird ein Oxidationsmittel (beispielsweise Sauerstoff oder Luft) durch Aufnahme der Elektronen reduziert. Der elektrische Kreislauf schließt sich, indem die Sauerstoffionen über den Elektrolyten zur Anode fließen und an den entsprechenden Grenzflächen mit dem Brennstoff reagieren.

Bei SOFC Systemen sind aus dem Stand der Technik verschiedene Ausführungsformen bekannt, die im Folgenden kurz skizziert werden sollen. Bei einer ersten Variante, technisch am weitesten fortgeschritten, ist der Elektrolyt die mechanisch tragende Zellkomponente ("Electrolyte Supported Cell", ESC). Die Schichtdicke des Elektrolyten ist hierbei verhältnismäßig groß, ca. 100-150 µm und besteht meist aus Yttriumoxid (YSZ) oder Scandiumoxid (ScSZ) stabilisierten Zirkoniumdioxid. Um eine ausreichende lonenleitfähigkeit des Elektrolyten zu erzielen müssen diese Brennstoffzellen bei einer verhältnismäßig hohen Betriebstemperatur von ca. 850-1000°C betrieben werden. Diese hohe Betriebstemperatur führt zu hohen Anforderungen an die verwendeten Materialien.

Die Bestrebungen nach niedrigerer Betriebstemperatur führten in Folge zur Entwicklung von unterschiedlichen Dünnschichtsystemen. Dazu zählen Anoden- bzw. Kathoden gestützte ("Anode-Supported Cell" bzw. "Cathode-Supported Cell") SOFC Systeme, bei denen ein relativ dickes (mind. ca 200 µm) mechanisch tragendes keramisches Anoden- bzw. Kathodensubstrat mit einer dünnen, elektrochemisch aktiven Anoden- bzw. Kathodenfunktionsschicht verbunden ist. Da die Elektrolytschicht keine mechanisch tragende Rolle mehr auszuführen hat, kann diese verhältnismäßig dünn ausgeführt werden und die Betriebstemperatur aufgrund des geringeren ohmschen Widerstands dementsprechend reduziert werden.

Neben diesen rein keramischen Systemen wurden als jüngste Generation SOFC Dünnschichtsysteme entwickelt, die auf einem metallischen Trägersubstrat basieren, sogenannte Metallgestützte SOFC ("Metall-Supported Cell", MSC). Diese metallisch-keramischen Verbundsysteme zeigen gegenüber rein keramischen Dünnschichtsystemen Vorteile hinsichtlich der Herstellungskosten, thermischen- und Redox-Zyklierbarkeit sowie der mechanischen Stabilität und können auf Grund ihres Dünnschichtelektrolyten zudem bei einer noch niedrigeren Betriebstemperatur von ca. 600°C bis 800 °C betrieben werden. Aufgrund ihrer spezifischen Vorteile sind sie insbesondere für mobile Anwendungen, wie beispielsweise zur elektrischen Versorgung von Personenkraftwagen oder Nutzfahrzeugen (APU-Auxiliary Power Unit) geeignet. Eine aus dem Stand der Technik bekannte, exemplarische MSC besteht aus einem ca. 1 mm dicken porösen, dadurch gasdurchlässigen, metallischen Trägersubstrat, auf das eine 60-70 µm dicke Kathoden-Elektrolyt-Anodeneinheit, der eigentlich elektrochemisch aktiven Schichtanordnung, angeordnet ist. Typischerweise ist die Anode dem Trägersubstrat zugewandt und in der Abfolge der Schichtanordnung näher am Metallsubstrat als die Kathode.

Intensive Forschungsaktivitäten zur Leistungssteigerung von SOFC Systemen, insbesondere bei Anoden-, Kathoden- oder Metallsubstratgestützen SOFC, haben eine Verringerung der Schichtdicke des Elektrolyten zum Ziel, wobei gleichzeitig eine ausreichende Gasdichtheit gewährleistet bleiben muss (Leckrate < 1,0 x 10⁻³ hPa dm³ /(s cm²) (gemessen unter Luft mit Druckanstiegsmethode (Fa. Dr. Wiesner, Remscheid, Typ: Integra DDV) bei einer Druckdifferenz dp = 100 hPa).

Bekannte Herstellungsverfahren für keramische Dünnschichtelektrolyte umfassen neben nasskeramischen Verfahren wie Nasspulverbeschichten oder Siebdruck, bei denen der Elektrolyt zur erforderlichen Gasdichtheit im Anschluss (bei Verwendung von Yttrium stabilisierten Zirkoniumoxid (YSZ) bei etwa 1400°C) gesintert wird, Beschichtungsverfahren wie beispielsweise physikalische Gasphasenabscheidung (PVD - Physical Vapour Deposition).

Beschichtungsverfahren wie PVD weisen aufgrund der geringeren Prozesstemperatur insbesondere für metallsubstratgestützte SOFC erhebliche Vorteile auf. Während Beschichtungsverfahren in der Regel verwendet werden, um die Eigenschaften von überwiegend glatten Oberflächen zu modifizieren, so steht man bei der Anwendung von PVD für SOFC vor der Herausforderung, auf einem porösen Substrat wie beispielsweise der Anode eine gasdichte Schicht mit möglichst geringer Dicke abzuscheiden. Das Schichtwachstum und die Mikrostruktur (entscheidend für die Gaspermeabilität) der aufgetragenen Elektrolytschicht wird wesentlich durch die Oberflächenstruktur des Substrats (Porosität, Oberflächenrauhigkeit, Risse, Defekte, ...) beeinflusst.

Bei Elektrodengestützten SOFC ist es in der Vergangenheit gelungen, mittels PVD, gasdichte Elektrolyte mit einer Schichtdicke von unter 3 µm, zu realisieren (DE 10 2007 015 358 A1). Die dünne Schichtdicke des Elektrolyten wird durch eine Vorbehandlung der Oberfläche des Anodensubstrats, die die Porosität verringert, vor dem PVD Beschichtungsprozess erreicht. Beispielsweise können oberflächennahe Poren der Anode aus einer Mischung aus Nickeloxid (NiO) und mit 8 mol% Yttriumoxid vollstabilisiertem Zirkoniumoxid (8YSZ) durch eine über Vakuumschlickerguss aufgetragene YSZ-Suspension verschlossen werden, wodurch nach anschließender Sinterung eine ausreichend glatte Oberflächenstruktur des Anodensubstrats bereitgestellt wird, auf die ein Elektrolyt mit dichter Struktur abgeschieden werden kann (N. Jordan-Escalona, Herstellung von Hochtemperatur-Brennstoffzellen über physikalische Gasphasenabscheidung, Dissertation, Univ. Bochum 2008). Die notwendige Gasdurchlässigkeit der Anode stellt sich während des ersten Betriebs der Brennstoffzelle ein, wenn das NiO in der Anode zu metallischem Ni reduziert wird und sich dadurch die Porosität der Anode auf etwa 20% bis 30% erhöht.

Zur Optimierung ist eine Ausführung des Elektrolyten aus einem Mehrlagenschichtverbund aus Gadolinium dotiertem Ceroxid (CGO), YSZ und CGO bekannt (DE 10 2007 015 358 A1).

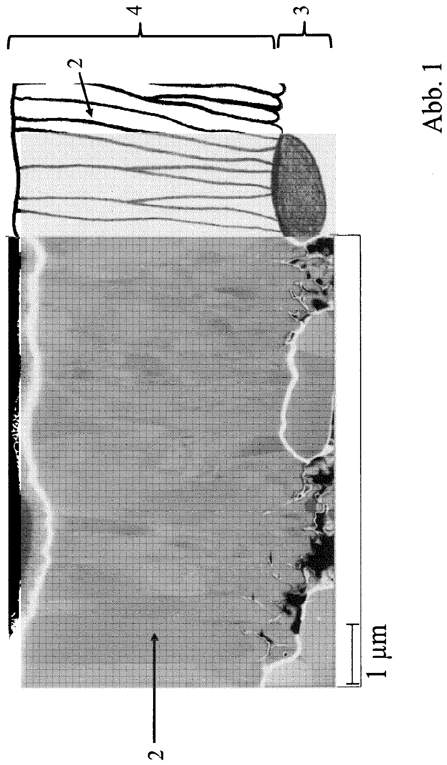

Beim Versuch, dieses bei anodengestützten SOFC verwendete Herstellungsverfahren auf metallsubstratgestützte SOFC (MSC) zu übertragen, stößt man auf folgende prozessbedingte Schwierigkeit. Aufgrund des metallischen Trägersubstrats müssen die Prozessschritte für MSC in reduzierender Atmosphäre erfolgen, die Sinterung der Anode findet unter geringem Sauerstoffpartialdruck statt. Unter diesen Bedingungen liegt in der Anode das Ni bereits überwiegend metallisch vor und ist vergröbert, es können Korngrößen bis zu ca. 1 µm auftreten. Die zu beschichtende, reduziert vorliegende Anode einer MSC weist daher eine deutlich höhere Oberflächenrauhigkeit und größere Poren auf als die oxidierte Anode bei Elektrodengestützten SOFC. Aus diesem Grund kann derzeit bei mit PVD hergestellten MSC Elektrolyten eine ausreichende Gasundurchlässigkeit nur bei einer Elektrolytschichtdicke ab etwa 5 µm erreicht werden (Thomas Franco et al. Development and Industrialization of Metal-Supported SOFC; 10th European SOFC Forum 2012; Luzern, Switzerland). Ein Beispiel für eine derartige MSC zeigt Abb. 1. Dabei wurde ein etwa 5 µm dicker Elektrolyt aus 8YSZ mittels eines Sputterverfahrens auf eine vorgesinterte Anode aus einer Mischung aus Ni und 8YSZ aufgebracht. Als Träger für die Anode dient ein pulvermetallurgisch hergestelltes Trägersubstrat auf Basis einer Eisen-Chrom Legierung, wobei sich zwischen Metallsubstrat und Anode noch eine Diffusionsbarriereschicht aus CGO befindet. Der Elektrolyt wird unter Zufuhr von Sauerstoff als Reaktivgas aus einem metallischen ZrY-Sputtertarget hergestellt. Aufgrund des Schichtwachstums weist der Elektrolyt eine stängelige Struktur auf, wobei einzelne Stängel die gesamte Dicke des Elektrolyten durchziehen können und sich entlang der Korngrenzen Zwischenräume bilden, wo Gas hindurchdiffundieren kann. Um ausreichende Gasdichtheit zu erreichen, ist daher eine entsprechende Dicke des Elektrolyten erforderlich.

Zur Verringerung der Gaspermeabilität von mittels Beschichtungsverfahren hergestellten Elektrolyten sind aus dem Stand der Technik weiters Hybridverfahren bekannt, bei denen dem Beschichtungsprozess ein thermischer Behandlungsschritt nachfolgt.

Ein derartiges Beispiel findet sich in EP 2 083 466 A1, bei dem der mittels eines Sputterverfahrens aufgebrachte Elektrolyt in einem anschließenden Sinterprozessschritt verdichtet wird. In EP 2 083 466 A1 wird zur Bildung des Elektrolyten zuerst auf eine Anodenschicht mittels eines HF (Hochfrequenz) Magnetron Sputterverfahrens eine erste Schicht aus einem oxidischen Sputtertarget, beispielsweise 8YSZ, abgeschieden, und im einem nachfolgenden Schritt mittels eines reaktiven Sputterverfahrens (DC oder HF) aus einem metallischen Sputtertarget, beispielsweise Zrₓ Y₁₋ₓ, eine zweite Schicht aufgebracht. Diese Anode-Elektrodeneinheit wird anschließend einem Sinterprozess bei etwa 1400 °C für eine Dauer von etwa 6 Stunden unterzogen, bevor in einem abschließenden Schritt eine Kathodenschicht aufgebracht wird. Nachteilig ist, dass zwei Anlagen mit zwei verschiedenen Sputtertargets benötigt werden und zur Konsolidierung der Elektrolytschicht ein teurer und zeitaufwendiger Sinterprozessschritt bei hohen Temperaturen erforderlich ist. Aufgrund der hohen Prozesstemperatur ist dieses Verfahren zudem nicht für MSC geeignet.

Ein weiterer Ansatz zur Herstellung einer gasundurchlässigen, äußerst dünnen Elektrolytschicht, bei dem ein Beschichtungsverfahren mit einem nachfolgenden Wärmebehandlungsschritt kombiniert wird, wird in EP 1 513 623 B1 offenbart. In EP 1 513 623 B1 wird ein feinporiges Aluminiumsubstrat (Porendurchmesser bis zu 200 nm) mittels eines DC Sputterverfahrens unter Verwendung eines Sputtertarget aus Yttrium-Zirkonium (YZ) beschichtet, anschließend das metallisch abgeschiedene YZ in oxidierender Atmosphäre bei etwa 300°C - 400°C zu YSZ oxidiert und zur Ausbildung eines gleichmäßigen Films einem abschließenden Wärmebehandlungsschritt bei etwa 700 °C unterzogen. Es konnte auf diese Weise ein gasdichter, einlagig ausgeführter Elektrolyt mit einer Schichtdicke kleiner als 500 nm erzielt werden. Das Verfahren ist für die praktische Anwendung insbesondere bei MSC nur bedingt übertragbar, da einerseits die auftretende Substratporengröße bei MSC größer ist und andererseits das mit einer Oxidschicht vorliegende Aluminium für den Einsatz als Elektrode elektrisch leitfähig gemacht werden müsste.

Weiters sind aus der Patentliteratur verschiedene Mehrlagenschichtsysteme für Elektrolyten bekannt, beispielsweise WO 2007/045111 A1, WO 02/17420 A1 oder WO 2005/057685. WO97/41612 beschreibt eine Kathode-Elektrolyt-Anodeneinheit für eine Hochtemperaturbrennstoffzelle, mit einem mehrlagigen, zwischen einer porösen Anode und einer porösen Kathode angeordneten Festkörperelektrolyten, wobei der Festkörperelektrolyt durch ein physikalisches Gasphasenabscheideverfahren hergestellt ist und einen schichtförmigen Aufbau aus mindestens einer ersten Schicht und mindestens einer zweiten Schicht aufweist. Es besteht insbesondere für MSC Weiterentwicklungsbedarf des Elektrolyten.

Die Anforderungen an den Elektrolyten einer elektrochemischen Funktionseinrichtung wie einer SOFC lassen sich wie folgt zusammenfassen: bei Betriebstemperatur hohe Sauerstoffionenleitfähigkeit und geringe Elektronenleitfähigkeit, chemische und mechanische Stabilität bei verwendeter Prozessgasatmosphäre (Luft bzw. Brenngas-Atmosphäre), gute Hafteigenschaften mit angrenzenden Funktionsschichten und ausreichende Gasdichtheit, um das Prozessgas an der Anodenseite (Brenngas) vom Prozessgas an der Kathodenseite (Luft) zu trennen.

Der vorliegenden Erfindung liegt die Aufgabe zugrunde, eine kostengünstige Kathode-Elektrolyt-Anodeneinheit für den Einsatz in einer elektrochemischen Funktionseinrichtung, insbesondere in einer Hochtemperatur-Brennstoffzelle, zu schaffen, bei dem der Elektrolyt voranstehend genannten Anforderungen genügt und eine möglichst geringen ohmschen Widerstand aufweist. Das Verfahren zur Herstellung einer solchen Kathode-Elektrolyt-Anodeneinheit soll insbesondere für eine MSC geeignet sein.

Diese Aufgabe wird durch die Gegenstände und Verfahren mit den Merkmalen gemäß den unabhängigen Patentansprüchen gelöst.

Erfindungsgemäß wird eine Kathode-Elektrolyt-Anodeneinheit vorgeschlagen, bei der der zwischen Kathode und Anode angeordnete Festkörperelektrolyt mehrlagig ausgeführt ist und mittels physikalischer Gasphasenabscheidung hergestellt wird. Unter physikalischer Gasphasenabscheidung werden insbesondere Sputtern (Kathodenzerstäubung), Reaktivsputtern (reaktive Kathodenzerstäubung), Gasphasenabscheidung mit Hilfe eines Elektronenstrahls (Electron-beam Physical Vapor Deposition), Laserstrahlverdampfen (Pulsed Laser Deposition) oder vergleichbare Beschichtungsverfahren oder eine Kombination dieser Beschichtungsverfahren gezählt. Der Festkörperelektrolyt weist einen schichtförmigen Aufbau aus mindestens einer ersten Schicht und mindestens einer zweiten Schicht auf, wobei die zweite Schicht einen höheren Sauerstoffgehalt aufweist als die erste Schicht und die beiden Schichten mit Ausnahme von Sauerstoff im Wesentlichen bis auf Spurenelemente die gleiche Zusammensetzung aufweisen. Die beiden Schichten unterscheiden sich daher primär in ihrem Sauerstoffgehalt.

Die erste Schicht mit niedrigerem Sauerstoffgehalt kann metallisch aufgebracht sein, die zweite Schicht mit höherem Sauerstoffgehalt kann oxidkeramisch aufgebracht sein. Unter metallisch aufgebracht ist das Abscheiden einer zuvor (bspw. mittels eines Sputterverfahrens) in die Gasphase überführten metallischen Verbindung zu verstehen, unter oxidkeramisch aufgebracht das Abscheiden eines Oxids dieser metallischen Verbindung. Das Metalloxid kann dabei beispielsweise unter Verwendung eines (Sputter)Targets bestehend aus dem Metalloxid abgeschieden werden oder unter Verwendung eines metallischen Targets unter Zufuhr von Sauerstoff als Reaktivgas (Reaktives Sputtern). Prozessbedingt, beispielsweise aufgrund von Restsauerstoff in der Beschichtungsanlage, kann sich in die metallisch aufgebrachte Schicht etwas Sauerstoff einlagern, die metallisch aufgebrachte Schicht muss daher nicht rein metallisch sein und kann nicht-metallische Phasen aufweisen. Die metallisch aufgebrachte Schicht weist aber einen deutlich niedrigeren Sauerstoffgehalt auf als die oxidkeramisch aufgebrachte Schicht. Die erste Schicht ist also unterstöchiometrisch ausgebildet. Unter "unterstöchiometrisch" ist zu verstehen, dass beim Abscheiden der entsprechenden Schicht die Sauerstoffeinlagerung geringer ist als sie zur Erzielung eines stöchiometrischen Verhältnisses in der abgeschiedenen Schicht notwendig ist.

Der erfindungsgemäßen Lösung liegt der Gedanke zugrunde, dass eine metallisch aufgebrachte Schicht in vorteilhafter Weise aufgrund der geringeren Schmelztemperatur des Metalls im Vergleich zum entsprechenden Metalloxid unter sonst gleichen Prozessbedingungen deutlich kompakter und dichter abgeschieden werden kann als eine oxidkeramische Schicht aus dem zugehörigen Metalloxid. Die Stängel in der metallisch abgeschiedenen Schicht sind in der Regel kleiner als die Stängel in der entsprechenden oxidkeramisch abgeschiedenen Schicht. Durch den Wechsel zwischen Schichten mit niedrigerem oder höheren Sauerstoffgehalt (metallisch und oxidkeramisch aufgebrachten Schichten) wird zudem die für Beschichtungsverfahren charakteristische Stängelstruktur des Elektrolyten, wobei sich bei einem herkömmlichen, mittels PVD hergestellten Elektrolyten aus 8YSZ einzelne Stängel typischerweise über die gesamte Dicke des Elektrolyten erstrecken können, unterbrochen und die längliche Ausdehnung der Kristallite in Wachstumsrichtung auf die Dicke einer Zwischenschicht beschränkt. Da der Elektrolyt keinem anschließenden Sinterverfahren unterzogen wird, bleiben die Form und die bevorzugte Ausrichtung der Kristallite in Wachstumsrichtung bestehen. In der Regel wirkt sich diese positiv auf die Sauerstoffionenleitfähigkeit des Elektrolyten aus. Die metallisch aufgebrachte unterstöchiometrische Schicht ist ursprünglich nicht bzw. äußerst gering Sauerstoffionen leitend, die Sauerstoffionen - Leitfähigkeit des Elektrolyten erhöht sich aber signifikant, wenn der Elektrolyt in Luft bzw. sauerstoffhältiger Atmosphäre, beispielsweise während der ersten Minuten beim ersten Betrieb der Kathode-Elektrolyt-Anodeneinheit, ausgelagert wird und sich Sauerstoffionen in die metallisch abgeschiedene(n) Schicht(en) einlagern. Die chemische Zusammensetzung der einzelnen Schichten des Elektrolyten ist dann im Wesentlichen gleich, es können aber strukturelle Unterschiede, beispielsweise im Kristallsystem, in dem die Kristallite der ursprünglich metallisch aufgebrachten unterstöchiometrischen bzw. oxidkeramisch aufgebrachten Schichten möglicherweise unterschiedlich auskristallisiert sind, weiterhin bestehen bleiben. Durch die Sauerstoffeinlagerung findet eine Volumenzunahme der metallisch aufgebrachten Schicht mit ursprünglich niedrigem Sauerstoffgehalt statt, wodurch sich die metallisch aufgebrachte Schicht zusätzlich verdichtet und etwaige Zwischenräume verkleinert werden können. Aufgrund der bis auf Spurenelemente vergleichbaren Zusammensetzung sind die angrenzenden Schichten des Elektrolyten einander gegenüber chemisch beständig und weisen einen vergleichbaren thermischen Ausdehnungskoeffizienten auf.

In einer ersten Grundausführungsform weist der Elektrolyt zwei Schichten auf, eine erste Schicht mit niedrigerem Sauerstoffgehalt, die bevorzugt metallisch aufgebracht wird, und eine zweite Schicht mit höherem Sauerstoffgehalt, welche bevorzugt oxidkeramisch aufgebracht wird, wobei sich bis auf den Sauerstoffgehalt und etwaigen Verunreinigungen oder Spurenelementen die chemische Zusammensetzung der beiden Schichten nicht unterscheidet. Insbesondere bei Selten-Erd- oder Erdalkali-Elemente-haltigen Elektrodenmaterial kann zwischen Elektrolyt und Elektrode mindestens eine weitere Funktionsschicht wie beispielsweise eine Diffusionsbarriereschicht aus CGO vorgesehen sein. Typischerweise wird die metallische Schicht mit niedrigerem Sauerstoffgehalt als Deckschicht auf die oxidkeramische Schicht mit höherem Sauerstoffgehalt aufgebracht.

In einer bevorzugten Ausführungsform wird der Wechsel zwischen den Schichten mit unterschiedlichem Sauerstoffgehalt (oxidkeramisch und metallisch aufgebracht) mehrmals wiederholt, der Elektrolyt besteht dann aus einem Schichtsystem aus mindestens drei Zwischenschichten, wobei erste, metallisch aufgebrachte Schichten mit niedrigerem Sauerstoffgehalt und zweite, oxidkeramisch aufgebrachte Schichten mit höherem Sauerstoffgehalt in alternierender Weise übereinander angeordnet sind. Bevorzugt ist die Zusammensetzung der einzelnen oxidkeramisch bzw. metallisch aufgebrachten Schicht(en) gleich.

Bei einem dreilagigen Elektrolytschichtsystem ergibt sich als Abfolge der Schichtanordnung daher Zwischenschicht mit höherem Sauerstoffgehalt, Zwischenschicht mit niedrigerem Sauerstoffgehalt, Zwischenschicht mit höherem Sauerstoffgehalt (bzw. oxidkeramisch/metallisch/oxidkeramisch aufgebracht) bzw. Zwischenschicht mit niedrigerem Sauerstoffgehalt, Zwischenschicht mit höherem Sauerstoffgehalt, Zwischenschicht mit niedrigerem Sauerstoffgehalt (bzw. metallisch/oxidkeramisch/metallisch aufgebracht). Die Vorteile der Erfindung kommen insbesondere bei mehrmaligem Wechsel zwischen Schichten mit unterschiedlichem Sauerstoffgehalt zur Geltung, in vorteilhaften Ausführungsvarianten kann der mehrlagige Elektrolyt beginnend von insgesamt 4 Zwischenschichten (d.h. in alternierender Anordnung insgesamt 2 oxidkeramisch aufgebrachte Schichten mit höherem Sauerstoffgehalt und 2 metallisch aufgebrachte Schichten mit niedrigerem Sauerstoffgehalt) bis hin zu insgesamt 50 Zwischenschichten (d.h. in alternierender Anordnung insgesamt 25 oxidkeramisch aufgebrachte Schichten mit höherem Sauerstoffgehalt und 25 metallisch aufgebrachte Schichten mit niedrigerem Sauerstoffgehalt) aufweisen. Bei gleichbleibender Gesamtdicke des Elektrolyten ist eine höhere Anzahl von dünnen, alternierend aufgebrachten Zwischenschichten vorteilhaft für die Gasdichtheit des Elektrolyten, da die stängelige, kolumnare Struktur der Kristalliten, an dessen Korngrenzen sich längliche, sich über die gesamte Dicke der Zwischenschicht erstreckende Zwischenräume ausbilden können, häufiger unterbrochen wird. Zudem können durch das mehrmalige Wiederholen der Schichten mit unterschiedlichem Sauerstoffgehalt potentielle Schichtfehler des Substrats, auf dem der Elektrolyt aufgetragen wird, besser ausheilen. Zu beachten ist aber, dass eine sehr hohe Anzahl von Zwischenschichten sich aufgrund der großen Grenzfläche zwischen den Zwischenschichten eventuell negativ auf die Sauerstoffionentransportfähigkeit des Elektrolyten auswirken kann.

Auch wenn sich mittels Gasphasenabscheidungsverfahren regelmäßig Schichtdicken unter 200 nm realisieren lassen, so zeigt sich, dass eine Mindestdicke einer Zwischenschicht (metallisch oder oxidkeramisch aufgebracht) von etwa 200 nm vorteilhaft ist. Die Schichtdicke der metallisch aufgebrachten Zwischenschicht mit niedrigerem Sauerstoffgehalt soll 800 nm, insbesondere 500 nm nicht überschreiten, da aufgrund der späteren Sauerstoffeinlagerung eine Volumenzunahme stattfindet und dadurch Gefahr für ein Abplatzen bzw. Abblättern der Zwischenschicht besteht. Bei gleichbleibender Leckrate kann daher durch Verwendung des erfindungsgemäßen mehrlagigen Elektrolyten die Schichtdicke verringert und somit der ohmsche Widerstand reduziert werden.

Ein für die Herstellung des mehrlagigen Elektrolyten besonders geeigneter Werkstoff ist mit Erdalkali-Elementen oder Seltenen Erden dotiertes Zirkonium Ln_{y}Zr_{1-y}, wobei Ln = Y, Sc, Yb, Er und 0.08≤y≤0.12, für die metallisch abgeschiedenen Zwischenschichten und ein entsprechendes Oxid im stöchiometrischen Verhältnis Ln_{y}Zr_{1-y}O_{2-δ} wobei Ln= Y, Sc, Yb, Er und 0.08≤y≤0.12 für die oxidkeramisch aufgetragene Zwischenschicht. Ebenso geeignet ist dotiertes Cer AₓCe₁₋ₓ, wobei A=Gd, Sm, Y, Ca und 0.05≤x≤0.3 für die metallisch aufgetragene Zwischenschicht und entsprechend dotiertes Ceroxid AₓCe₁₋ₓO_{2-δ}, wobei A=Gd, Sm, Y, Ca und 0.05≤x≤0.3 für die oxidkeramisch aufgetragene Schicht. In die metallisch abgeschiedenen Zwischenschichten kann etwas Sauerstoff eingelagert sein, der Sauerstoffgehalt ist aber unterstöchiometrisch und deutlich geringer als in der oxidkeramisch aufgetragenen Zwischenschicht.

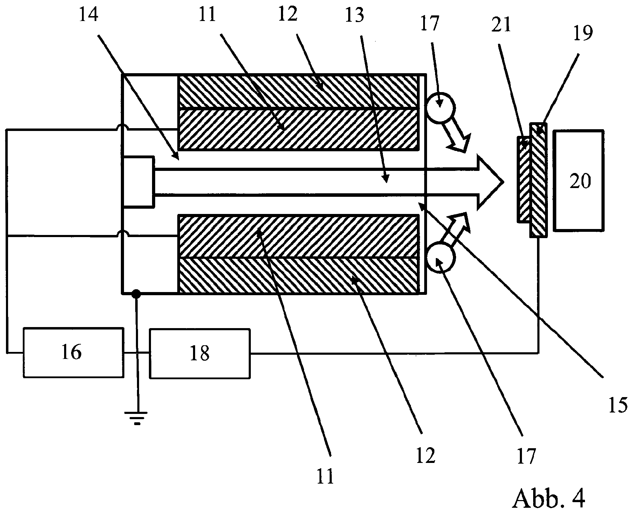

Ein wesentlicher Vorteil der Erfindung ist, dass zur Herstellung des mehrlagigen Elektrolyten ein teurer, energie- und zeitaufwendiger Sinterprozess bei hohen Temperaturen vermieden werden kann. Zur Fertigung des Elektrolyten kommt ein physikalisches Gasphasenabscheidungsverfahren als Beschichtungsverfahren zur Anwendung. Das Elektrolytmaterial wird dabei in die Gasphase übergeführt und zum zu beschichtenden Substrat geführt, wo es kondensiert. Es wird in alternierender Abfolge eine Schicht mit niedrigerem Sauerstoffgehalt und eine Schicht mit höherem Sauerstoffgehalt (metallische oder eine oxidkeramisch aufgebrachte Schicht) auf einem porösen Substrat wie der Elektrode oder gegebenenfalls einer weiteren Funktionsschicht, falls eine Funktionsschicht zwischen Elektrode und Elektrolyt vorgesehen ist, übereinander aufgebracht. Als Beschichtungsverfahren sind für die Erfindung insbesondere Sputterdepositionsverfahren wie DC-Sputtern, HF-Sputtern, lonenstrahlsputtern, Magnetronsputtern oder reaktives Sputtern zu nennen. Besonders vorteilhaft erweist sich sogenanntes Hohlkathoden-Gasfluss-Sputtern (Gas Flow Sputtering), ein spezielles Sputterdepositionsverfahren, bei dem festes Material durch Kathodenzerstäubung in einer Hohlkathoden-Glimmentladung abgetragen wird und mittels eines durch die Hohlkathode strömenden Arbeitsgases, meist Argon, zum außerhalb der Hohlkathode befindlichen Substrat transportiert wird, wo es als Schicht niederschlägt. Abb. 4 zeigt eine schematische Skizze dieses Verfahrens. Das Sputtertarget 11 hat die Gestalt einer Hohlkathode, meist in Form von zwei parallel angeordneten rechteckigen Platten oder als kurzes Rohr, und wird vom Arbeitsgas 13 durchströmt, das von einer rückwärtigen Öffnung 14 der Hohlkathode einströmt und an einer vorderen Öffnung 15 ausströmt und dabei das zerstäubte Kathodenmaterial mittransportiert. Die Hohlkathode wird mit der Kühlung 12 gekühlt. Das Target wird durch Arbeitsgas-Ionen aus der Glimmentladung zerstäubt, wobei die Geometrie der Hohlkathode verstärkend für die Glimmentladung wirkt. Die Glimmentladung wird durch die Quellenspannung 16 gezündet. Der typische Arbeitsdruck liegt bei 0.2 - 0.8 mbar. Aufgrund des vergleichsweise hohen Prozessdruckes verlieren die energiereichen Plasmateilchen auf dem Weg zum Substrat den größten Teil ihrer Energie, wodurch spannungsarme Schichten erzeugt werden können.

Oxidschichten können in einem reaktiven Prozess hergestellt werden. Dazu wird an der Hohlkathodenmündung, wo die Mischung des Arbeitsgases mit dem zerstäubten Kathodenmaterial aus der Hohlkathode ausströmt, Sauerstoff 17 als Reaktivgas zugeführt. Durch die Strömung des Arbeitsgases kann das Reaktivgas nicht zur Targetoberfläche vordringen, wodurch Plasma-Instabilitäten oder Ratenminderung, wie sie häufig bei reaktivem Magnetronsputtern auftritt, vermieden werden. Da kein Magnetfeld benötigt wird, erfolgt der Targetabtrag gleichmäßig und es kann mit sehr hoher Leistungsdichte gearbeitet werden, was einer hohen Beschichtungsrate zu Gute kommt. Ein besonderer Vorteil des Hohlkathoden-Gasfluss-Sputterns in Hinblick auf die vorliegende Erfindung ist, dass der Wechsel zwischen metallisch und oxidkeramisch aufgebrachten Schichten während des Beschichtungsvorganges einfach durch Einschalten bzw. Abschalten der Zufuhr von Sauerstoff als Reaktivgas bei sonst gleichbleibenden Parametern erfolgen kann und der mehrlagige Elektrolyt prozesstechnisch sukzessive und ohne Unterbrechung in einer Anlage hergestellt werden kann, ohne dass die Probe zwischen den Beschichtungen abgekühlt oder die Beschichtungskammer geöffnet werden müsste. Es lässt sich dadurch ein sehr guter Kontakt und Haftung zwischen den einzelnen Schichten erzielen. Aufgrund von Restsauerstoff in der Anlage kann sich auch in die metallisch aufgebrachte Schicht etwas Sauerstoff einlagern, die metallisch aufgebrachte Schicht muss daher nicht rein metallisch sein und kann nicht-metallische Phasen aufweisen. Sie weist aber einen deutlich niedrigeren Sauerstoffgehalt auf als die oxidkeramisch aufgebrachte Schicht. Zusätzlich kann am Substrat eine Bias-Spannung 18 zwischen Anode und Substrathalter 19 angelegt werden, um den Energieeintrag der Arbeitsgasionen auf das Substrat zu erhöhen und die abgeschiedene Schicht zu verdichten. Für die Schichtbildung kann es vorteilhaft sein, den Substrathalter zu heizen (keramischer Heizer 20). Um größere Flächen beschichten zu können, muss der Substrathalter 19 mit der zu beschichtenden Probe 21 vor der Quelle bewegt werden. Dies kann sowohl durch eine Pendelbewegung als auch durch ein langsames Vorbeifahren des Substrathalters vor der Quelle geschehen. Neben der Bias-Spannung spielt die Substrattemperatur, der Arbeitsgasfluss, der Reaktivgasfluss und der Abstand von Quellenfront zu Substratoberfläche eine Rolle für die Beschichtungsrate sowie der abgeschiedenen Schichtstruktur. Eine Vorrichtung für das Hohlkathoden-Gasfluss-Sputtern wird beispielsweise in EP1520290 B1 beschrieben.

Die erfindungsgemäße Kathode-Elektrolyt-Anodeneinheit ist für Anoden- bzw. Kathodengestützte SOFC einsetzbar, im speziellen für MSC, wo die Kathode-Elektrolyt-Anodeneinheit auf ein metallisches Trägersubstrat aufgebracht und gestützt wird. Sie kann aber auch beispielsweise für einen Elektrolyseur oder in der Membrantechnologie zur elektrochemischen Gastrennung eingesetzt werden.

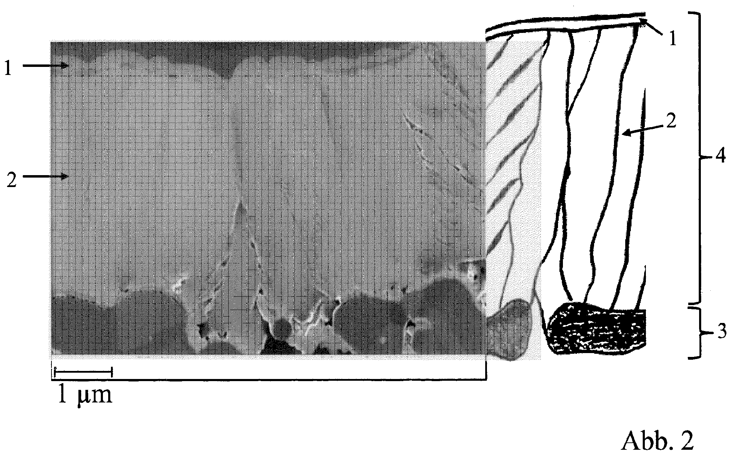

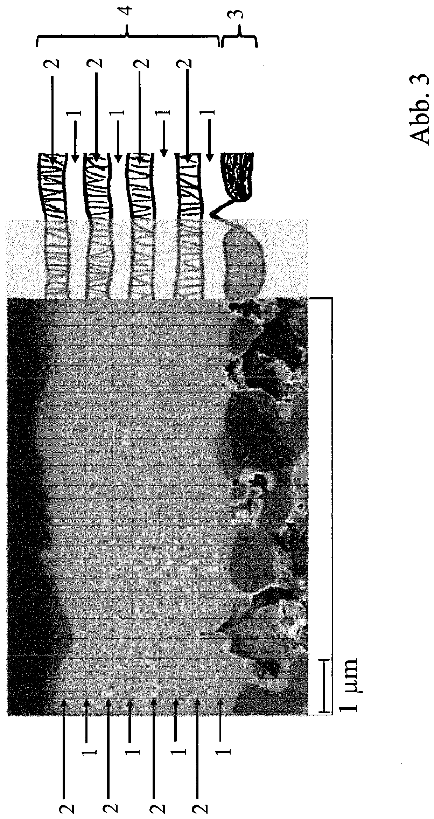

Die Erfindung wird anhand nachfolgender Beispiele näher erläutert, wobei auf die Abbildung 2 und 3 Bezug genommen wird. Die Beispiele in Abb. 2 und Abb. 3 zeigen eine MSC im Querschnitt und sind erfindungsgemäße Weiterentwicklungen der aus dem Stand der Technik bekannten in Abb. 1 dargestellten MSC. Die Abbildungen sind an einer Seite zur Verdeutlichung der Strukturen schematisch ergänzt worden. Das metallische Trägersubstrat der MSC wird jeweils gemäß AT 008 975 U1 pulvermetallurgisch hergestellt und besteht aus einer ferritischen Eisen-Chrom Legierung (Fe >50 Gew. % und 15 bis 35 Gew. % Cr) mit einem zusätzlichen Mischoxid-Anteil (0.01-2 Gew %, wobei die Mischoxide vorzugsweise aus der Gruppe Y,Sc,Seltenerdmetalle und/oder aus der Gruppe Ti, Al, Cr stammen) und einer Porosität von 30-60%. Auf dieses als Träger fungierende poröse Metallsubstrat wird mittels PVD eine Diffusionsbarriereschicht aus CGO aufgebracht, um eine Interdiffusion zwischen Metallsubstrat und der nachfolgenden Anode zu unterbinden. Die Anode wird als mehrlagiger gradierter Anodenschichtverbund aus Ni-8YSZ Cermet mit einer Dicke von etwa 30 bis 50 µm ausgeführt und über eine nasskeramische Route hergestellt (Siebdruckverfahren) und anschließend bei etwa 1200°C 5 h in reduzierender Atmosphäre gesintert. Die Erzeugung der Elektrolytschichten erfolgt durch Gasphasenabscheidung in einer Hohlkathoden-Gasfluss-Sputteranlage, wobei ein metallisches ZrY-Sputtertarget (Zr 85,2 at%, Y 14,8%) zur Anwendung kommt. Das metallische Target ist kommerziell erhältlich beispielsweise bei der MaTecK GmbH oder der Sindlhauser Materials GmbH. Vor der eigentlichen Beschichtung wird das Substrat im Ultraschallbad mit flüssigen Reinigungsmitteln vorgereinigt. Die Beschichtungsprozesskammer wird evakuiert (Kammervolumen ca. 200 I, Saugvermögen des Pumpstands 1000 m³/h) und das Substrat langsam (max. 20 K pro Minute) auf etwa 500°C erhitzt und dann mit Hilfe eines Argonplasmas (erzeugt durch Anlegen einer mittelfrequenten DC-Puls-Bias-Spannung mit nomineller Biasspannung >100 V, 200 kHz und 1 µs Gegenpulsdauer) gesäubert, wobei ein Prozessdruck von ca. 0,1 mbar bei einem Volumenstrom von Ar von ca. 400 sccm vorliegt. Nach dieser "lonenfeinreinigung" beginnt der eigentliche Beschichtungsprozess. Die im Folgenden dargestellten Parameter beziehen sich auf eine Gasfluss-SputterQuelle mit Baulänge 250 mm und müssen für andere Quellengrößen angepasst, bspw. linear skaliert werden. Als Prozessgas wird Argon bei einem Volumenstrom von etwa 5000 sccm verwendet (Ausbildung einer Hohlkathodenentladung bei gegebener Quellen-Baulänge und einem Prozessdruck von ca. 0,5 mbar), als Reaktivgas wird Sauerstoff bei einem Volumenstrom von etwa 60 sccm verwendet. Die Quellenspannung zwischen Kathode und Anode beträgt etwa 330 V und es wird dabei eine Leistung von etwa 5000 W im Plasma umgesetzt. Während der Beschichtung wird zwischen Substrat (Probe) und Kathode eine nominelle mittelfrequente Biasspannung von etwa 30-150 V eingestellt (200 kHz, 1 µs Gegenpulsdauer) (die Höhe der nominellen Bias-Spannung ist unter anderem von der gewünschten Dichte der Sputterschicht bzw. der Ausführung des vorliegenden Untergrunds sowie des Abstands von Substrat zu Quellenfront (hier ca. 40 mm) abhängig und ist vom Fachmann an die jeweilige Situation anzupassen).

Im Beispiel 1 (Abb. 2) wurde ein etwa 4 µm dicker Elektrolyt erzeugt, wobei die ersten 3,5 µm unter Zufuhr von Sauerstoff abgeschieden wurden und eine etwa 0,5 µm dicke Deckschicht ohne Zufuhr von Sauerstoff als Reaktivgas aufgebracht wurde. Der Elektrolyt umfasst also eine 3,5 µm Schicht mit höherem Sauerstoffgehalt und eine 0,5 µm dicke Deckschicht mit niedrigerem Sauerstoffgehalt.

Das Beispiel 2 (Abb. 3) weist einen Elektrolyt-Schichtverbund mit insgesamt 8 Zwischenschichten auf, wobei alternierend, beginnend mit einer metallisch aufgebrachten Schicht, jeweils eine etwa 0,5 µm dicke Zwischenschicht ohne Reaktivgas und eine etwa 0,5 µm dicke Zwischenschicht unter Zufuhr von Reaktivgas aufgebracht wurden.

Auf diesem Elektrolyt wurde jeweils eine weitere 1 bis 2 µm dicke CGO Schutzschicht mit Hilfe eines PVD Verfahrens aufgebracht. Diese Schutzschicht verhindert eine chemische Reaktion zwischen Elektrolyt und Kathodenmaterial, insbesondere die Bildung von Strontiumzirkonaten (LaSrZrO, SrZrO).

Abschließend wird eine 20 bis 60 µm dicke poröse Kathode aus Lanthan-Strontium-Kobalt-Eisenoxid (LSCF, (La_{0.6} Sr_{0.4} Co_{0.8} Fe_{0.2}) O_{3-δ}) mittels Siebdruckverfahren aufgedruckt, wobei vor dem Siebdruck gegebenenfalls die Probe nochmals einer Plasmabehandlung unterzogen werden kann. Die Aktivierung der Kathode erfolgt in situ während der ersten Betriebsstunden der Zelle. Bei den in den Abb. 1-3 dargestellten Beispielen fehlt jeweils eine CGO Schutzschicht bzw. die Kathode.

In beiden Ausführungsbeispielen ist die mehrlagige Struktur des Elektrolyten ersichtlich. Die kolumnare Struktur des Elektrolyten, die sich aus dem aus dem Stand der Technik bekannten Beispiel in Abb. 1 über die gesamte Dicke des Elektrolyten erstrecken kann, ist unterbrochen und auf die Dicke einer Zwischenschicht beschränkt. Die Kristallite der metallisch und oxidkeramisch abgeschiedenen Schicht unterscheiden sich in der Form und dem ausgebildeten Kristallsystem. Während die einzelnen Stängel der oxidkeramisch abgeschiedenen Schicht ein für 8YSZ typisches tetragonales oder kubisches Kristallsystem ausbilden und kolumnar vorzugsweise in Wachstumsrichtung angeordnet sind, so sind die Kristallite der metallisch abgeschiedenen Schicht kleiner und auf Grund der fehlenden Sauerstoffatome in der Regel in anderen Kristallsystemen auskristallisiert. In einer Röntgendiffraktometrie Phasenanalyse (X-ray diffraction phase analysis, verwendetes Gerät AXS D4 Endeavor der Firma Bruker) sind allerdings in der metallisch abgeschiedenen Schicht keine rein metallischen Phasen festzustellen, sondern eine hexagonale Phase (charakteristisch für Zr₃O) und eine kubische Phase (charakteristisch für YZrO₃) erkennbar, welche auf den vorhandenen Restsauerstoff, der sich beim Umschalten von reaktiv zu metallisch noch länger in der Anlage befindet, zurückzuführen ist. Wird der Elektrolyt an Luft (bei 500 °C, Haltezeit 20 h) ausgelagert, so können sich zusätzlich monokline Phasen charakteristisch für ZrO₂, finden.

Im späteren Betrieb stellt sich durch Einlagerung von Sauerstoff auch in der metallischen Schicht ein tetragonales oder kubisches Kristallsystem ein.

Erfindungsgemäß konnte ein gasdichter Elektrolyt mit 4 µm Dicke hergestellt werden. Der Elektrolyt in Beispiel 1 (Abb. 2) weist eine Leckrate von 7,6 10⁻⁴ hPa dm³ s⁻¹ cm⁻², der Elektrolyt in Beispiel 2 (Abb. 3) eine Leckrate von 2,9 10⁻⁴ hPa dm³ s⁻¹ cm⁻² auf (jeweils gemessen unter Raumtemperatur und Luft mit Druckanstiegsmethode (Fa. Dr. Wiesner, Remscheid, Typ: Integra DDV) bei einer Druckdifferenz dp = 100 hPa). Der Elektrolyt weist abgesehen von Spurenelementen keine weiteren Elemente als Yttrium, Zirkonium und Sauerstoff auf.

## Patentansprüche

1. Kathode-Elektrolyt-Anodeneinheit für eine elektrochemische Funktionseinrichtung, insbesondere eine Hochtemperaturbrennstoffzelle, mit einem mehrlagigen, zwischen einer porösen Anode (3) und einer porösen Kathode (4) angeordneten Festkörperelektrolyten (5), wobei der Festkörperelektrolyt durch ein physikalisches Gasphasenabscheideverfahren hergestellt ist und einen schichtförmigen Aufbau aus mindestens einer ersten Schicht (1) und mindestens einer zweiten Schicht (2) aufweist, wobei die zweite Schicht (2) einen höheren Sauerstoffgehalt aufweist als die erste Schicht (1) und die erste und zweite Schicht(en) mit Ausnahme von Sauerstoff im Wesentlichen die gleiche Zusammensetzung aufweisen.

2. Kathode-Elektrolyt-Anodeneinheit nach Anspruch 1, **dadurch gekennzeichnet, dass** der Festkörperelektrolyt eine alternierende Schichtabfolge aufweist, bei der erste Schichten mit niedrigerem Sauerstoffgehalt (1) und zweite Schichten mit höherem Sauerstoffgehalt (2) abwechselnd übereinander angeordnet sind.

3. Kathode-Elektrolyt-Anodeneinheit nach Anspruch 2, **dadurch gekennzeichnet dass** der Festkörperelektrolyt aus einer alternierenden Schichtabfolge aus insgesamt mindestens zwei ersten Schichten mit niedrigerem Sauerstoffgehalt (1) und mindestens zwei zweiten Schichten mit höherem Sauerstoffgehalt (2) aufgebaut ist.

4. Kathode-Elektrolyt-Anodeneinheit nach einem der vorangehenden Ansprüche, **dadurch gekennzeichnet, dass** die erste Schicht(en) mit niedrigerem Sauerstoffgehalt (1) und die zweite Schicht(en) mit höherem Sauerstoffgehalt (2) eine unterschiedliche Kristallstruktur ausbilden.

5. Kathode-Elektrolyt-Anodeneinheit nach einem der vorangehenden Ansprüche, **dadurch gekennzeichnet, dass** die ersten Schicht(en) mit niedrigerem Sauerstoffgehalt (1) jeweils eine Schichtdicke zwischen 200 und 800 nm, insbesondere eine Schichtdicke zwischen 300 und 500 nm, aufweist/en.

6. Kathode-Elektrolyt-Anodeneinheit nach einem der vorangehenden Ansprüche, **dadurch gekennzeichnet, dass** die zweite Schicht(en) mit höherem Sauerstoffgehalt (2) jeweils eine Schichtdicke zwischen 200 und 800 nm aufweist(en).

7. Kathode-Elektrolyt-Anodeneinheit nach einem der vorangehenden Ansprüche, **dadurch gekennzeichnet, dass** die Schichtdicke des Festkörperelektrolyten zwischen 1 und 10 µm beträgt.

8. Kathode-Elektrolyt-Anodeneinheit nach einem der vorangehenden Ansprüche, **dadurch gekennzeichnet, dass** die ersten Schicht(en) (1) aus mit Erdalkali-Elementen oder Seltenen Erden dotiertem Zr, insbesondere aus Y dotiertem Zr oder aus Sc dotiertem Zr, oder aus Gd dotiertem Ce und unterstöchiometrisch eingelagertem Sauerstoff besteht und die zweite Schicht(en) aus einem entsprechenden stöchiometrischen Oxid gebildet ist.

9. Kathode-Elektrolyt-Anodeneinheit nach einem der vorangehenden Ansprüche, **dadurch gekennzeichnet, dass** zwischen dem mehrlagigen Festkörperelektrolyten und den Elektroden mindestens eine weitere Schicht, insbesondere eine Diffusionsbarriereschicht, angeordnet ist.

10. Verwendung der Kathode-Elektrolyt-Anodeneinheit nach einem der vorangehenden Ansprüche in einer metallsubstratgestützten Brennstoffzelle, in einer anodengestützten Brennstoffzelle oder in einer kathodengestützten Brennstoffzelle.

11. Verfahren zur Herstellung eines mehrlagigen Festkörperelektrolyten mit alternierend angeordneten metallisch (1) und oxidkeramisch (2) aufgebrachten Schichten für eine elektrochemische Funktionseinrichtung, insbesondere eine Hochtemperaturbrennstoffzelle, auf Basis eines Gasphasenabscheideverfahrens mit den Schritten
a. Bereitstellen eines (porösen) Substrats
b. Wahlweise Erzeugen einer metallisch (1) oder einer oxidkeramisch (2) aufgebrachten Schicht, wobei
die metallisch aufgebrachte Schicht (1) durch Abscheiden einer Mischung von zuvor (mittels eines Sputterverfahrens) in die Gasphase überführten Metallen hergestellt wird und die oxidkeramisch aufgebrachte Schicht (2) durch Abscheiden der zuvor in die Gasphase überführten (oder gasförmigen) Mischung von Metallen unter Zufuhr von Sauerstoff oder eines sauerstoffhaltigen Gases als Reaktivgas hergestellt wird
c. Ein oder mehrmaliges Wiederholen von Schritt b), um eine Schichtfolge zu erzielen, bei der metallisch (1) und oxidkeramisch (2) aufgebrachte Schichten alternierend übereinander angeordnet sind.

12. Verfahren nach Anspruch 11, **dadurch gekennzeichnet, dass** die Beschichtung des Substrats mittels eines Gasfluss-Sputter-Verfahrens, insbesondere eines Hohlkathoden Gasfluss-Sputter-Verfahrens erfolgt.

13. Verfahren nach Anspruch 11 oder 12, **dadurch gekennzeichnet, dass** die Schichtdicke der metallisch aufgebrachten Schicht(en) (1) zwischen 200 und 800 nm beträgt.

14. Verfahren nach Anspruch 11 bis 13, **dadurch gekennzeichnet, dass** die Schichtdicke der oxidkeramisch aufgebrachten Schicht(en) (2) zwischen 200 und 800 nm beträgt.

15. Verfahren nach Anspruch 11 bis 13, **dadurch gekennzeichnet, dass** als erste Schicht eine oxidkeramisch aufgebrachte Schicht (2) mit einer Schichtdicke zwischen 500 nm und 3 µm auf das Substrat aufgetragen wird und mögliche nachfolgende oxidkeramisch aufgebrachte Schichten (2) eine Schichtdicke zwischen 200 und 800 nm aufweisen.

## Claims

1. Cathode-electrolyte-anode unit for an electrochemical functional device, more particularly a high-temperature fuel cell, comprising a multi-layered solid electrolyte (5), arranged between a porous anode (3) and a porous cathode (4), the solid electrolyte being produced by a physical vapour deposition process and comprising a layered structure of at least one first layer (1) and at least one second layer (2), the second layer (2) comprising a higher oxygen content than the first layer (1), and the first and second layers having substantially the same composition except for oxygen.

2. Cathode-electrolyte-anode unit according to Claim 1, **characterized in that** the solid electrolyte comprises an alternating layer sequence wherein first layers with lower oxygen content (1) and second layers with higher oxygen content (2) are arranged alternately one above another.

3. Cathode-electrolyte-anode unit according to Claim 2, **characterized in that** the solid electrolyte is composed of an alternating layer sequence of a total of at least two first layers with lower oxygen content (1) and at least two second layers with higher oxygen content (2).

4. Cathode-electrolyte-anode unit according to any of the preceding claims, **characterized in that** the first layer or layers with lower oxygen content (1) and the second layer or layers with higher oxygen content (2) form a different crystal structure.

5. Cathode-electrolyte-anode unit according to any of the preceding claims, **characterized in that** the first layer or layers with lower oxygen content (1) has or have in each case a layer thickness of between 200 and 800 nm, more particularly a layer thickness of between 300 and 500 nm.

6. Cathode-electrolyte-anode unit according to any of the preceding claims, **characterized in that** the second layer or layers with higher oxygen content (2) has or have in each case a layer thickness of between 200 and 800 nm.

7. Cathode-electrolyte-anode unit according to any of the preceding claims, **characterized in that** the layer thickness of the solid electrolyte is between 1 and 10 µm.

8. Cathode-electrolyte-anode unit according to any of the preceding claims, **characterized in that** the first layer or layers (1) consist of Zr doped with alkaline earth elements or rare earths, more particularly of Y-doped Zr or of Sc-doped Zr, or of Gd-doped Ce and substoichiometrically intercalated oxygen, and the second layer or layers are formed from a corresponding stoichiometric oxide.

9. Cathode-electrolyte-anode unit according to any of the preceding claims, **characterized in that** at least one further layer, more particularly a diffusion barrier layer, is arranged between the multi-layered solid electrolyte and the electrodes.

10. Use of the cathode-electrolyte-anode unit according to any of the preceding claims in a metal-substrate-supported fuel cell, in an anode-supported fuel cell or in a cathode-supported fuel cell.

11. Method for producing a multi-layered solid electrolyte with metallically (1) and oxide-ceramically (2) applied layers arranged in alternation for an electrochemical functional device, more particularly a high-temperature fuel cell, on the basis of a vapour deposition process, comprising the steps of
a. providing a (porous) substrate
b. alternatively generating a metallically (1) or an oxide-ceramically (2) applied layer, where
the metallically applied layer (1) is produced by depositing a mixture of metals converted beforehand (by means of a sputtering process) into the gas phase,
and the oxide-ceramically applied layer (2) is produced by depositing the mixture of metals converted beforehand into the gas phase (or gaseous mixture), with supply of oxygen or of an oxygen-containing gas as reactive gas,
c. singly or multiply repeating step b), in order to obtain a layer sequence in which metallically (1) and oxide-ceramically (2) applied layers are arranged in alternation one above another.

12. Method according to Claim 11, **characterized in that** the substrate is coated by means of a gas flow sputtering process, more particularly a hollow-cathode gas flow sputtering process.

13. Method according to Claim 11 or 12, **characterized in that** the layer thickness of the metallically applied layer or layers (1) is between 200 and 800 nm.

14. Method according to any of Claims 11 to 13, **characterized in that** the layer thickness of the oxide-ceramically applied layer or layers (2) is between 200 and 800 nm.

15. Method according to any of Claims 11 to 13, **characterized in that** as first layer an oxide-ceramically applied layer (2) with a layer thickness of between 500 nm and 3 µm is applied to the substrate, and possible subsequent oxide-ceramically applied layers (2) have a layer thickness of between 200 and 800 nm.

## Revendications

1. Unité cathode-électrolyte-anode pour un dispositif fonctionnel électrochimique, en particulier une pile à combustible à haute température, avec un électrolyte solide multicouche (5) disposé entre une anode poreuse (3) et une cathode poreuse (4), dans laquelle l'électrolyte solide est préparé par un procédé de dépôt physique en phase gazeuse et présente une structure en couches composée d'au moins une première couche (1) et au moins une deuxième couche (2), dans laquelle la deuxième couche (2) présente une teneur en oxygène plus élevée que la première couche (1) et la première et la deuxième couches présentent, à l'exception de l'oxygène, essentiellement la même composition.

2. Unité cathode-électrolyte-anode selon la revendication 1, **caractérisée en ce que** l'électrolyte solide présente une suite alternée de couches, dans laquelle des premières couches avec une teneur en oxygène plus faible (1) et des deuxièmes couches avec une teneur en oxygène plus élevée (2) sont disposées en alternance l'une au-dessus de l'autre.

3. Unité cathode-électrolyte-anode selon la revendication 2, **caractérisée en ce que** l'électrolyte solide est constitué par une suite alternée de couches comprenant au total au moins deux premières couches avec une teneur en oxygène plus faible (1) et au moins deux deuxièmes couches avec une teneur en oxygène plus élevée (2).

4. Unité cathode-électrolyte-anode selon l'une quelconque des revendications précédentes, **caractérisée en ce que** la/les première(s) couche(s) avec une teneur en oxygène plus faible (1) et la/les deuxième(s) couche(s) avec une teneur en oxygène plus élevée (2) forment une structure cristalline différente.

5. Unité cathode-électrolyte-anode selon l'une quelconque des revendications précédentes, **caractérisée en ce que** la/les première(s) couche(s) avec une teneur en oxygène plus faible (1) présente(nt) respectivement une épaisseur de couche comprise entre 200 et 800 nm, en particulier une épaisseur de couche comprise entre 300 et 500 nm.

6. Unité cathode-électrolyte-anode selon l'une quelconque des revendications précédentes, **caractérisée en ce que** la/les deuxième(s) couche(s)avec une teneur en oxygène plus élevée (2) présente(nt) respectivement une épaisseur de couche comprise entre 200 et 800 nm.

7. Unité cathode-électrolyte-anode selon l'une quelconque des revendications précédentes, **caractérisée en ce que** l'épaisseur de couche de l'électrolyte solide vaut entre 1 et 10 µm.

8. Unité cathode-électrolyte-anode selon l'une quelconque des revendications précédentes, **caractérisée en ce que** la/les première(s) couche(s) (1) se compose(nt) de Zr dopé avec des éléments alcalino-terreux ou des terres rares, en particulier de Zr dopé avec Y ou de Zr dopé avec Sc ou de Ce dopé avec Gd et d'oxygène inséré à un niveau sous-stoechiométrique et la/les deuxième(s) couche(s) se compose(nt) d'un oxyde stoechiométrique correspondant.

9. Unité cathode-électrolyte-anode selon l'une quelconque des revendications précédentes, **caractérisée en ce qu'**au moins une autre couche, en particulier une couche de barrière de diffusion, est disposée entre l'électrolyte solide multicouche et les électrodes.

10. Utilisation de l'unité cathode-électrolyte-anode selon l'une quelconque des revendications précédentes dans une pile à combustible à substrat métallique, dans une pile à combustible à support anodique ou dans une pile à combustible à support cathodique.

11. Procédé de fabrication d'un électrolyte solide multicouche avec des couches déposées en métal (1) et en oxyde céramique (2) disposées en alternance pour un dispositif fonctionnel électrochimique, en particulier une pile à combustible à haute température, sur la base d'un procédé de dépôt physique en phase gazeuse, comprenant les étapes suivantes:
a. préparer un substrat (poreux),
b. produire au choix une couche déposée en métal (1) ou en oxyde céramique (2), dans lequel
la couche déposée en métal (1) est fabriquée par dépôt d'un mélange de métaux préalablement convertis en phase gazeuse (au moyen d'un procédé de pulvérisation cathodique) et
la couche déposée en oxyde céramique (2) est fabriquée par dépôt du mélange de métaux préalablement convertis en phase gazeuse (ou gazeux) avec apport d'oxygène ou d'un gaz contenant de l'oxygène comme gaz de réaction,
c. répéter une fois ou plusieurs fois l'étape b), pour obtenir une suite de couches, dans laquelle des couches déposées en métal (1) et en oxyde céramique (2) sont disposées en alternance l'une au-dessus de l'autre.

12. Procédé selon la revendication 11, **caractérisé en ce que** l'on effectue le revêtement du substrat au moyen d'un procédé de pulvérisation à flux gazeux, en particulier au moyen d'un procédé de pulvérisation à flux gazeux à cathode creuse.

13. Procédé selon la revendication 11 ou 12, **caractérisé en ce que** l'épaisseur de couche de la/des couche(s) déposée(s) en métal (1) vaut entre 200 et 800 nm.

14. Procédé selon une revendication 11 à 13, **caractérisé en ce que** l'épaisseur de couche de la/des couche(s) déposée(s) en oxyde céramique (2) vaut entre 200 et 800 nm.

15. Procédé selon une revendication 11 à 13, **caractérisé en ce que** l'on dépose comme première couche sur le substrat une couche déposée en oxyde céramique (2) avec une épaisseur de couche comprise entre 500 nm et 3 µm et d'éventuelles couches suivantes déposées en oxyde céramique (2) présentent une épaisseur de couche comprise entre 200 et 800 nm.
